# EUROPÄISCHE PATENTANMELDUNG

(11) **EP 4 364 546 A1**
(43) Veröffentlichungstag der Anmeldung: **08.05.2024**
(21) Anmeldenummer: 23205528.5
(22) Anmeldetag: 24.10.2023
(51) Int. Cl.: A01B 69/04, B62D 1/28, B62D 7/15, B62D 15/02

(54) **VERFAHREN, STEUEREINRICHTUNG UND LENKSYSTEM ZUM AUTOMATISIERTEN LENKEN EINES LANDWIRTSCHAFTLICHEN FAHRZEUGS SOWIE LANDWIRTSCHAFTLICHES FAHRZEUG**

(30) Priorität: 04.11.2022 DE 102022129186
(71) Anmelder: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(57) **Zusammenfassung**

Die Erfindung betrifft ein Verfahren zum automatisierten Lenken eines landwirtschaftlichen Fahrzeugs (10) auf einer landwirtschaftlichen Fläche (50), wobei das landwirtschaftliche Fahrzeug (10) mindestens zwei lenkbare Achsen (12) aufweist, gekennzeichnet durch die Schritte,
- Vorbestimmen von einem Pfad (60) auf der landwirtschaftlichen Fläche (50) entlang welchem das landwirtschaftliche Fahrzeug (10) automatisiert bewegt wird,
- Vorgabe von sich unterscheidenden Lenkarten zur Erzeugung von Lenkbewegungen für die Achsen (12) zum Bewegen des landwirtschaftlichen Fahrzeugs (10) entlang des Pfades (60),
- zumindest zeitweises Bestimmen einer momentanen Lage des landwirtschaftlichen Fahrzeugs (10) gegenüber dem Pfad (60),
- automatisiertes Auswählen eines Lenkprogrammes anhand der momentanen Lage des landwirtschaftlichen Fahrzeugs (10) gegenüber dem Pfad (60).

Die Erfindung betrifft zudem eine Steuereinrichtung (100) zum automatisierten Lenken eines landwirtschaftlichen Fahrzeugs (10). Zudem betrifft die Erfindung ein Lenksystem für ein landwirtschaftliches Fahrzeug (10). Darüber hinaus betrifft die Erfindung ein landwirtschaftliches Fahrzeug (10)

## Beschreibung

Die Erfindung betrifft ein Verfahren zum automatisierten Lenken eines landwirtschaftlichen Fahrzeugs auf einer landwirtschaftlichen Fläche. Die Erfindung betrifft zudem eine Steuereinrichtung zum automatisierten Lenken eines landwirtschaftlichen Fahrzeugs. Zudem betrifft die Erfindung ein Lenksystem für ein landwirtschaftliches Fahrzeug. Darüber hinaus betrifft die Erfindung ein landwirtschaftliches Fahrzeug mit einem Lenksystem.

Aus dem Stand der Technik sind landwirtschaftliche Fahrzeuge bekannt die zumindest zwei Achsen aufweisen deren Räder jeweils lenkbar sind, wobei die Räder in der Regel derartig gelenkt werden, dass das Fahrzeug einem gewünschten Pfad möglichst exakt folgt. Das Lenken der jeweiligen Achsen erfolgt durch eine Anpassung der Lenkwinkel der die Achsen bildenden Räder.

Werden die aus dem Stand der Technik bekannten landwirtschaftlichen Fahrzeuge mit großen Arbeitsbreiten aufweisenden Arbeitsgeräten gekoppelt, kann es mitunter vorkommen, dass es aufgrund der Lenkbewegungen des Fahrzeugs entlang des jeweiligen Pfades zu Schlingerbewegungen der Arbeitsgeräte kommt, wodurch ein jeweiliges Arbeitsergebnis der Arbeitsgeräte entlang des jeweiligen Pfades mitunter nicht in gewünschter Weise erfolgt, da bereits kleinste Schlingerbewegungen große Bewegungen an Außenbereichen des Arbeitsgerätes hervorrufen können.

Das Lenken der Fahrzeuge entlang einem gewünschten Pfad erfolgt zudem zunehmend automatisiert, d.h. ohne ein Eingreifen durch eine Bedienperson, durch welches Eingreifen bspw. Schlingerbewegungen entgegengewirkt werden könnte.

Aufgabe der Erfindung ist es somit, die beschriebenen Nachteile des Standes der Technik zu beseitigen. Insbesondere soll ein landwirtschaftliches Fahrzeug geschaffen werden, welches exakt entlang eines gewünschten Pfads bewegt werden kann.

Diese Aufgaben der Erfindung werden gelöst durch ein Verfahren zum automatisierten Lenken eines landwirtschaftlichen Fahrzeugs mit den Merkmalen des Verfahrensanspruch 1, durch eine Steuereinrichtung mit den Merkmalen des Anspruch 13, durch ein Lenksystem mit den Merkmalen des Anspruch 15, sowie durch ein landwirtschaftliches Fahrzeug mit den Merkmalen des Anspruch 16. Vorteilhafte Ausführungsformen und Weiterbildungen der Erfindung sind in den Ansprüchen und der folgenden Beschreibung unter teilweiser Bezugnahme auf die Figuren offenbart.

Es sei darauf hingewiesen, dass zur Vermeidung von Wiederholungen die erfindungsgemäßen Ausführungsformen und Merkmale in beliebiger Weise mit dem Verfahren, der Steuereinrichtung, dem Lenksystem und/oder dem landwirtschaftlichen Fahrzeug kombinierbar sind auch wenn diese Ausführungsformen und Merkmale nicht jeweils explizit für das Verfahren, die Steuereinrichtung, das Lenksystem und/oder das landwirtschaftliche Fahrzeug erwähnt sind. Dementsprechend sind alle Ausführungsformen und erfindungsgemäßen Merkmale sowohl für das Verfahren, als auch für die Steuereinrichtung, als auch für das Lenksystem, als auch für das landwirtschaftliche Fahrzeug offenbart und beanspruchbar.

Gemäß einem ersten Aspekt der Erfindung wird ein Verfahren zum automatisierten Lenken eines landwirtschaftlichen Fahrzeugs auf einer landwirtschaftlichen Fläche bereitgestellt, wobei das landwirtschaftliche Fahrzeug mindestens zwei lenkbare Achsen aufweist.

Das Verfahren umfasst ein Vorbestimmen von einem Pfad auf der landwirtschaftlichen Fläche, entlang welchem das landwirtschaftliche Fahrzeug automatisiert bewegt wird, respektive entlang welchem das landwirtschaftliche Fahrzeug während des Betriebes bewegt werden soll.

Ein weiterer Verfahrensschritt umfasst die Vorgabe von sich voneinander unterscheidenden Lenkarten (z.B. zumindest zwei sich voneinander unterscheidenden Lenkarten) zur Erzeugung von Lenkbewegungen (z.B. definiert durch entsprechende Lenksignale) für die Achsen zum Bewegen des landwirtschaftlichen Fahrzeugs entlang des Pfades.

Zudem umfasst das Verfahren ein zumindest zeitweises Bestimmen einer momentanen Lage des landwirtschaftlichen Fahrzeugs gegenüber dem Pfad.

Darüber hinaus umfasst das Verfahren ein automatisiertes Auswählen einer der Lenkarten anhand der momentanen Lage des landwirtschaftlichen Fahrzeugs gegenüber dem Pfad.

Die Erfindung macht sich die Erkenntnis zu Nutze, dass durch die Verwendung von unterschiedlichen Lenkarten, d.h. durch die Verwendung von entsprechend auf die Lage des Fahrzeuges gegenüber einem zu befahrenden Pfad angepassten, sich insbesondere voneinander unterscheidenden Lenkarten, landwirtschaftliche Fahrzeuge gegenüber den aus dem Stand der Technik bekannten landwirtschaftlichen Fahrzeugen, wesentlich exakter entlang einem gewünschten Pfad bewegt werden können, wodurch Schlingerbewegungen von landwirtschaftlichen Fahrzeugen oder von an landwirtschaftlichen Fahrzeugen angebauten Arbeitsgeräten nahezu vollständig unterbunden werden können.

Die Abfolge der jeweiligen Schritte des Verfahrens können in einer festgelegten Abfolge ausgeführt werden, wobei es optional jedoch auch denkbar ist, dass die Schritte des Verfahrens in einer beliebigen Abfolge durchgeführt werden können. Auch ein beliebiger Wechsel zwischen den Verfahrensschritten ist denkbar.

Bevorzugt werden die Schritte des Verfahrens kontinuierlich ausgeführt und/oder interwallweise ausgeführt.

Das landwirtschaftliche Fahrzeug ist bspw. ein Trägerfahrzeug, an welches landwirtschaftliche Arbeitsgeräte (z.B. Verteilelemente, Bodenbearbeitungswerkzeuge, Säschare und/oder dergl.) unmittelbar oder mittelbar montiert werden können. Das landwirtschaftliche Fahrzeug kann alternativ oder ergänzend auch eine landwirtschaftliche Zugmaschine und/oder eine selbstfahrende Arbeitsmaschine sein. Insbesondere kann es sich beim landwirtschaftlichen Fahrzeug um eine Feldspritze und/oder einen Düngerstreuer handeln. Auch kann es sich beim landwirtschaftlichen Fahrzeug um einen Traktor handeln. Wobei der Traktor wiederum ein Standardtraktor oder ein Gantry System in Form eines Wide-Span-Tractor sein kann. Insbesondere ist das landwirtschaftliche Fahrzeug für den landwirtschaftlichen Einsatz eingerichtet.

Das landwirtschaftliche Fahrzeug kann gemäß einer bevorzugten Ausführungsvariante ein autonomes (z.B. teilautonom oder vollautonom) Fahrzeug sein, welches insbesondere eingerichtet ist, sich autonom entlang dem Pfad zu bewegen.

Die Achsen können insbesondere jeweils durch eine oder zwei Bodenabstützungen gebildet sein. Wobei wiederum die Bodenabstützungen durch ein Rad oder mehrere Räder gebildet sein können und/oder durch ein Raupenlaufwerk oder mehrere Raupenlaufwerke gebildet sein können. Es sei hierzu angemerkt dass im vorliegenden bei der Verwendung des Begriffes Räder gleichsam zweckmäßig auf Raupenlaufwerk vom Schutzumfang mit umfasst sind.

Es sei darauf hingewiesen, dass jegliche im Zusammenhang mit dem landwirtschaftlichen Fahrzeug definierten Sensoreinrichtungen, Positionsbestimmungssysteme oder dergl. gleichermaßen auch an einem, am landwirtschaftlichen Fahrzeug angebauten Arbeitsgerät angebracht sein können, wobei entsprechend der vorliegenden Beschreibung auch Anordnungen der Sensoreinrichtungen, Positionsbestimmungssysteme oder dergl. am Arbeitsgerät entsprechend vom Schutzumfang der Ansprüche umfasst sind auch wenn diese im Zusammenhang mit dem landwirtschaftlichen Fahrzeug genannt sind. D.h. im vorliegenden Beziehen sich, wenn nicht ausdrücklich anders beschrieben, somit jegliche Sensoreinrichtungen, Positionsbestimmungssysteme oder dergl. immer auf eine Gesamtheit einer Fahrzeugeinheit, bestehend aus einem landwirtschaftlichen Fahrzeug und zumindest einem Arbeitsgerät.

Bevorzugt ist es möglich, dass der Pfad durch zumindest eine Pflanzenreihe definiert ist und/oder durch in einer Steuereinrichtung hinterlegte Leitlinien (z.B. mittels GPS definierte A-B-Linien, wie bspw. Leitlinien), definiert ist. Vorzugsweise kann vorgesehen sein, dass ein Wechsel der Auswahl des Pfades zwischen bspw. einer Pflanzenreihe und Leitlinien möglich ist, so dass bspw. eine Bedienperson zwischen einem durch zumindest eine Pflanzenreihe oder durch Leitlinien definiertem Pfad wechseln kann. Die Leitlinien können bspw. mit einem Spurplanungs- und/oder Routenplanungsprogramm definiert werden. Zur Bewegung des Fahrzeugs entlang einem durch bspw. A-B-Linien (d.h. Leitlinien) definierten Pfad kann bspw. ein Positionsbestimmungssystem vorgesehen sein. Alternativ oder ergänzend, kann zur Bewegung des Fahrzeugs entlang einem durch eine Pflanzenreihe definierten Pfad bspw. ein Kamerasystem vorgesehen sein.

Gemäß einer Weiterbildung des Verfahrens ist es möglich, dass der Schritt eines Bestimmens einer momentanen Lage des landwirtschaftlichen Fahrzeugs gegenüber dem Pfad ein Bestimmen eines im Wesentlichen parallel zum Pfad orientierten Abstands-Offset umfasst und/oder ein Bestimmen eines im Winkel gegenüber dem Pfad orientierten Winkel-Offset umfasst. Wobei die Bestimmung wiederum die Bestimmung einer Lage des landwirtschaftlichen Fahrzeugs umfassen kann und/oder die Bestimmung einer Lage eines an dem landwirtschaftlichen Fahrzeug angebauten Arbeitsgerätes umfassen kann. Insbesondere umfasst die Bestimmung der momentanen Lage eine Bestimmung einer Ausrichtung des landwirtschaftlichen Fahrzeugs gegenüber einer Ausrichtung des mittels des Fahrzeugs momentan zu befahrenden Pfads.

Ein Bestimmen des Abstands-Offset und/oder des Winkel-Offset kann bspw. mittels einer Sensoreinrichtung erfolgen, vorzugsweise mittels einer am landwirtschaftlichen Fahrzeug angebauten Sensoreinrichtung erfolgen, wobei die Sensoreinrichtung durch zumindest eine optische Erfassungseinrichtungen gebildet sein kann und/oder durch ein Positionsbestimmungssystem gebildet sein kann und/oder Beschleunigungserfassungseinrichtung und/oder Drehratenerfassungseinrichtung gebildet sein kann. Die optische Erfassungseinrichtung kann bspw. durch eine oder mehrere Kameras, Lasersensoren, Radarsensoren und/oder dergl. Sensoren bzw. Erfassungssystem gebildet sein. Das Positionsbestimmungssystem kann bspw. durch ein oder mehrere GPS-System(e) gebildet sein, mittels welchem eine Lage des landwirtschaftlichen Fahrzeugs an einer oder mehreren Positionen dieses (d.h. an mehreren zueinander beabstandeten Positionen), gegenüber dem Pfad erfasst werden kann. Auch eine Kombination aus zumindest einer Erfassungseinrichtung und zumindest einem Positionsbestimmungssystem wäre zur Bestimmung der Lage denkbar. Die Beschleunigungserfassungseinrichtung kann bspw. einen oder mehrere Beschleunigungssensoren umfassen. Die Drehratenerfassungseinrichtung kann bspw. einen oder mehre Drehratensensoren, Gyroskope oder dergl. umfassen. Die Beschleunigungserfassungseinrichtung und/oder Drehratenerfassungseinrichtung können bspw. jeweils zwei Sensoren umfassen welche beabstandet zueinander am landwirtschaftlichen Fahrzeug angebaut sein können.

Gemäß einer bevorzugten Weiterbildung des Verfahrens kann vorgesehen sein, dass der Schritt des Vorbestimmens von einem Pfad auf der landwirtschaftlichen Fläche erfolgt durch eine manuelle Eingabe von Leitlinien (d.h. A-B-Linien) in einer Steuereinrichtung und/oder ein Hinterlegen von Leitlinien in einer Steuereinrichtung und/oder ein sensorisches Erfassen von Pflanzenreihen durch eine, mit einer Steuereinrichtung signalverbundenen und/oder signalverbindbaren Erfassungseinrichtung, wobei die Steuereinrichtung zur Eingabe und/oder zum Hinterlegen und/oder zur Übertragung der Signale der Erfassungseinrichtung vorzugsweise eine Schnittstelle aufweist. Die Schnittstelle kann bspw. entsprechend mit einer Eingabeeinrichtung in Form eines Bediengerätes (z.B. Terminal, mobiles Endgerät, Spurplanungsprogramm und/oder dergl.) gekoppelt (z.B. signaltechnisch gekoppelt) werden. Alternativ oder ergänzend kann die Schnittstelle entsprechend mit einem oder mehreren, die Sensoreinrichtung bildende(n) Sensoren gekoppelt werden.

Es sei angemerkt, dass es möglich ist, dass zur Vorbestimmung eines Pfades und zum Bestimmen eines Pfades jeweils die gleichen Sensoreinrichtungen, bzw. die die Sensoreinrichtung bildenden Sensoren, Erfassungseinrichtungen und/oder Positionsbestimmungssysteme eingesetzt werden können. Wobei es zweckmäßig vorzugsweise auch möglich ist, dass das Vorbestimmen von einem Pfad auf der landwirtschaftlichen Fläche durch ein sensorisches Erfassen mittels einer am landwirtschaftlichen Fahrzeug angebrachten Sensoreinheit (z.B. Kamera) erfolgt oder dass der jeweilige Pfad bspw. durch eine Eingabe und/oder ein Hinterlegen einer Fahrtroute und/oder einer Leitlinie definiert wird.

Es ist möglich, dass das Vorbestimmen eines Pfades und/oder das Bestimmen von einer momentanen Lage online und/oder offline erfolgt, d.h. es kann vorgesehen sein, dass das Vorbestimmen eines Pfades und/oder das Bestimmen der momentanen Lage mittels am landwirtschaftlichen Fahrzeug angebrachten Sensoren erfolgt (d.h. online) und/oder mittels vom landwirtschaftlichen Fahrzeug beabstandeten Sensoren erfolgt (d.h. offline, bspw. mittels Drohne).

Gemäß einer Weiterbildung der Erfindung kann vorgesehen sein, dass die Lenkarten jeweils durch in einer Steuereinrichtung hinterlegte Lenkprogramme zur Bereitstellung von Lenksignalen zur Erzeugung von Lenkbewegungen für die Achsen definiert sind.

Gemäß einer Weiterbildung des erfindungsgemäßen Verfahrens kann vorgesehen sein, dass der Schritt des automatisierten Auswählens einer der Lenkarten anhand der momentanen Lage ein Wechseln zwischen sich voneinander unterscheidenden Lenkarten umfasst oder eine Beibehaltung einer ausgewählten Lenkart umfasst. Bevorzugt kann für die Auswahl zweckmäßig eine Wahleinheit vorgesehen sein. Insbesondere kann die Wahleinheit bspw. durch einen Regelalgorithmus in der Steuereinrichtung bspw. in einer Rechnereinheit gebildet sein kann. Anhand der Lenkart kann somit zweckmäßig das jeweilige Lenkprogramm zur Erzeugung von Lenkbewegungen für die Achsen ausgewählt werden, vorzugsweise mittels der Wahleinheit ausgewählt werden.

Wobei es alternativ oder ergänzend hierzu denkbar ist, dass ein Wechsel zwischen den Lenkarten oder eine Beibehaltung einer der Lenkarten ein automatisiertes Auswählen einer Lenkart umfasst, welche durch eine Allradlenkung mit jeweils gleichen Lenkwinkel und/oder Raddrehzahlen definiert ist, wobei diese Lenkart vorzugsweise bei einem Abstands-Offset automatisiert, ausgewählt wird. Zweckmäßig kann eine derartige Lenkart eine sog. Hundeganglenkung umfassen, d.h. eine Lenkung umfassten, bei welcher alle Räder in einem gleichen Winkel und in die gleiche Richtung bewegt werden.

Alternativ oder ergänzend ist es möglich, dass ein Wechsel zwischen den Lenkarten oder eine Beibehaltung einer der Lenkarten ein automatisiertes Auswählen einer Lenkart umfasst, welche durch eine Anpassung der jeweiligen Raddrehzahl und/oder von jeweiligen Lenkwinkel der jeweiligen Räder zueinander definiert ist, wobei diese Lenkart vorzugsweise bei einem Winkel-Offset automatisiert, ausgewählt wird. Zweckmäßig kann somit durch unterschiedliche Drehzahlen der Räder, d.h. dass bspw. die linken und die rechten Räder mit unterschiedlichen Drehzahlen angetrieben werden, sehr feinfühlig auf geringste Winkel-Offsets reagiert werden, alternativ wäre jedoch auch eine entsprechend Winkelanpassung einzelner oder aller Räder denkbar. Bevorzugt kann vorgesehen sein, dass die im Kurveninneren liegenden Räder eine andere, insbesondere kleinere, Raddrehzahl aufweisen als die im Kurvenäußeren liegenden Räder.

Alternativ oder ergänzend ist es möglich, dass ein Wechsel zwischen den Lenkarten oder eine Beibehaltung einer der Lenkarten ein automatisiertes Auswählen einer Lenkart umfasst welche, durch eine Beibehaltung der momentanen Ausrichtung der Räder und/oder der jeweiligen Raddrehzahl definiert ist, wobei diese Lenkart vorzugsweise automatisiert ausgewählt wird, wenn ein Abstands-Offset und/oder ein Winkel-Offset innerhalb vorgegebener und/oder vorgebbaren Toleranzen liegt. D.h. liegt bspw. weder ein ausreichend großer Abstands-Offset noch ein ausreichend großer Winkel-Offset vor, wird das landwirtschaftliche Fahrzeug unverändert weiterbewegt.

Vorzugsweise ist es möglich, dass die Lenkprogramme zur Definition der Lenkart jeweils derartig konfiguriert sind, dass eine Anpassung der Lenkwinkel und/oder der Raddrehzahlen unter Berücksichtigung des Momentanpol erfolgt, d.h. dass somit bspw. die im Kurveninnen liegenden Räder einen anderen Lenkwinkel aufweisen können als die im Kurvenäußeren liegenden Räder, sich deren Lotachsen jedoch in einem Momentanpol schneiden können.

Es sei darauf hingewiesen, dass die Lenkarten gemäß der vorliegenden Erfindung insbesondere durch sich voneinander unterscheidende Lenkprogramme definiert sind, welche wiederum durch eine sich voneinander unterscheidende Berechnung von entsprechenden Lenksignalen definiert sein können und bspw. auch durch ein einzelnes Programm, respektive durch sich voneinander unterscheidende Regelalgorithmen eines einzelnen Programms oder von mehreren Programmen abgebildet sein können.

Zudem sei darauf hingewiesen, dass im Kontext der Erfindung von der Definition "Lenkbewegung" jegliche die Bewegungsrichtung des landwirtschaftlichen Fahrzeugs beeinflussende Signale umfasst sind, d.h. bspw. Lenkwinkeländerungen der Räder umfasst sind, aber auch entsprechende Drehzahlanpassungen der Räder des Fahrzeugs umfasst sind, aber auch eine Beibehaltung der Bewegungsrichtung des landwirtschaftlichen Fahrzeugs umfasst ist.

Das automatisierte Lenken, respektive die automatisierte Auswahl einer Lenkart kann auch eine Auswahl einer der Lenkarten umfassen, welche durch ein automatisches Aktivieren oder Deaktivieren der Fahrzeuglenkung gekennzeichnet ist. Die Lenkart kann auch durch ein automatisches Aktivieren oder Deaktivieren von Lenkbewegungen von mindestens einer der mindestens zwei lenkbaren Achsen beziehungsweise einzelner Räder zum Lenken des landwirtschaftlichen Fahrzeugs gekennzeichnet sein.

Alternativ oder ergänzend ist es möglich, dass wenigstens eine Lenkart durch eine Vorgewendefahrt und/oder eine Transportfahrt definiert ist, wobei die Vorgewendefahrt und/oder die Transportfahrt zusätzlich eine zumindest zeitweise Deaktivierung der Bestimmung einer momentanen Lage des landwirtschaftlichen Fahrzeugs gegenüber dem Pfad umfasst, und/oder eine zumindest zeitweise Deaktivierung des automatisierten Auswählens einer der Lenkarten anhand der momentanen Lage des landwirtschaftlichen Fahrzeugs gegenüber dem Pfad umfasst. Zweckmäßig sind Lenkarten auswählbar, in denen das landwirtschaftliche Fahrzeug ohne das vorhanden sein eines vorbestimmten Pfades, vorzugsweise automatisiert bewegt werden können. Die Vorgewendefahrt und/oder die Transportfahrt kann insbesondere durch einen Betriebszustand des landwirtschaftlichen Fahrzeugs definiert sein, in dem sich keine Arbeitswerkzeuge in Bodenkontakt befinden und/oder in dem keine Verteilung von landwirtschaftlichen Verteilgütern erfolgt. Insbesondere kann die Vorgewendefahrt und/oder die Transportfahrt durch einen Betriebszustand definiert sein, in welchem die am landwirtschaftlichen Fahrzeug angebauten Arbeitsgeräte keinen landwirtschaftlichen Arbeitsprozess (z.B. Verteilung von Verteilgut, Bodenbearbeitung, Ernte von Erntegut, Bearbeitung jeglicher Art einer landwirtschaftlichen Fläche) ausführen.

Vorzugsweise ist es möglich, dass bei der Vorgewendefahrt und/oder Transportfahrt die Lage des Fahrzeugs gegenüber dem Pfad als feste Größe (z.B. GPS-Daten) vorgegeben wird, wodurch wiederum die Lenkart anhand der momentanen Lage des landwirtschaftlichen Fahrzeugs gegenüber dem Pfad automatisiert ausgewählt wird.

Ein automatisierter Wechsel der Lenkarten kann vorzugsweise fortlaufend erfolgen, d.h. die Lenkarten können somit bspw. zeitlich nacheinander oder zeitlich parallel ausgewählt werden.

Gemäß einer Weiterbildung des erfindungsgemäßen Verfahrens ist es möglich, dass ein automatisiertes Auswählen einer der Lenkarten unter Berücksichtigung einer Längendefinition erfolgt, wobei die Längendefinition durch die Größe des Abstands-Offset und/oder die Größe des Winkel-Offset definiert ist und wobei durch die Längendefinition ein Abstand in Fahrtrichtung des landwirtschaftlichen Fahrzeugs definiert wird, bis zu welchem der Abstands-Offset und/oder der Winkel-Offset wieder innerhalb einer vorgegebenen und/oder vorgebbaren Toleranz liegen sollen. Somit können ruckartige Lenkbewegungen, welche bspw. wiederum zu Schlingerbewegungen führen können, verhindert werden. Gemäß einer optionalen Weiterbildung hierzu kann vorgesehen sein, dass eine Längendefinition anhand einer Auswertung erfolgt, ob an dem landwirtschaftlichen Fahrzeug sich in Bodenkontakt befindende Arbeitswerkzeuge angebaut sind und/oder ob sich Arbeitswerkzeuge in Bodenkontakt befinden. Anhand der Längendefinition kann somit bspw. ein Algorithmus des jeweiligen Lenkprogramms zur Definition der Lenkart derartig ausgewählt und/oder angepasst werden, dass die Lenkbewegungen des landwirtschaftlichen Fahrzeugs derartig erfolgen, dass durch ein bspw. zu starkem oder häufigem Lenken dieses, an diesem angebaute, und sich in Bodenkontakt befindende Arbeitswerkzeuge nicht beschädigt werden. Insbesondere können anhand der Längendefinition die Größen der Lenkbewegungen und daraus die Lenkart vorgegeben werden.

Es ist möglich, dass den Lenkarten eine Geschwindigkeit, vorzugsweise ein Geschwindigkeitsbereich, des landwirtschaftlichen Fahrzeugs zugeordnet ist, wobei anhand der Lenkart eine Geschwindigkeit, vorzugsweise ein Geschwindigkeitsbereich des landwirtschaftlichen Fahrzeugs automatisiert angepasst wird. Alternativ oder ergänzend ist es möglich, dass ein automatisiertes Auswählen der Lenkart unter Berücksichtigung der Geschwindigkeit des landwirtschaftlichen Fahrzeugs erfolgt. Insbesondere ist es möglich, dass zu jeder Lenkart eine entsprechende Geschwindigkeit (z.B. durch eine Raddrehzahl definiert) des landwirtschaftlichen Fahrzeugs, respektive ein Geschwindigkeitsbereich des landwirtschaftlichen Fahrzeugs hinterlegt wird und entsprechend der automatisiert ausgewählten Lenkart auch die Geschwindigkeit des landwirtschaftlichen Fahrzeugs vorzugsweise automatisiert angepasst wird.

Gemäß einer Weiterbildung der Erfindung kann vorgesehen sein, dass eine Geschwindigkeit des landwirtschaftlichen Fahrzeugs, vorzugsweise ein Geschwindigkeitsbereich des landwirtschaftlichen Fahrzeugs anhand der Längendefinition angepasst wird oder umgekehrt, eine Längendefinition anhand der Geschwindigkeit angepasst wird.

Zweckmäßig kann vorgesehen sein, dass eine Lenkart anhand der momentanen Lage des landwirtschaftlichen Fahrzeugs gegenüber dem Pfad sowie unter Berücksichtigung der Längendefinition und/oder der Geschwindigkeit, vorzugsweise des Geschwindigkeitsbereich, des landwirtschaftlichen Fahrzeugs vorzugsweise automatisiert ausgewählt wird.

Zweckmäßig kann vorgesehen sein, dass eine Lenkart anhand der momentanen Lage des landwirtschaftlichen Fahrzeugs gegenüber dem Pfad sowie unter Berücksichtigung der Längendefinition automatisiert ausgewählt wird, wobei wiederum zu jeder Lenkart eine Geschwindigkeit, vorzugsweise ein Geschwindigkeitsbereich, des landwirtschaftlichen Fahrzeugs, zugeordnet ist und wobei anhand der Lenkart eine Geschwindigkeit, vorzugsweise ein Geschwindigkeitsbereich des landwirtschaftlichen Fahrzeugs automatisiert angepasst wird.

Gemäß einem weiteren Aspekt der Erfindung wird eine Steuereinrichtung, die zum automatisierten Lenken eines landwirtschaftlichen Fahrzeugs auf einer landwirtschaftlichen Fläche eingerichtet ist, bereitgestellt. Wobei das landwirtschaftliche Fahrzeug mindestens zwei lenkbare Achsen aufweist.

Die Steuereinrichtung umfasst eine Schnittstelle, die zum Erfassen eines, vorzugsweise vorbestimmten, Pfades zum automatisierten Befahren der landwirtschaftlichen Fläche eingerichtet ist. Die Schnittstelle kann bspw. eine Sensoreinrichtung umfassen oder eine Eingabeschnittstelle für ein Terminal oder dergl. umfassen. Dementsprechend kann das Erfassen ein sensorisches Erfassen und/oder eine manuelle Eingabe und/oder ein Einlesen und/oder ein Hinterlegen des Pfades umfassen.

Die Steuereinrichtung umfasst zudem eine Rechnereinheit, die zur Vorgabe von sich voneinander unterscheidenden Lenkarten zur Erzeugung von Lenkbewegungen für die Achsen zum Bewegen des landwirtschaftlichen Fahrzeugs entlang des Pfades eingerichtet ist.

Darüber hinaus umfasst die Steuereinrichtung eine Bestimmungseinheit, die zum zumindest zeitweisen Bestimmen einer momentanen Lage des landwirtschaftlichen Fahrzeugs gegenüber dem Pfad eingerichtet ist. Die Bestimmungseinheit kann bspw. durch die Sensoreinrichtung wie in diesem Dokument beschrieben, gebildet sein.

Zudem umfasst die Steuereinrichtung eine Wahleinheit, die zur automatisierten Auswahl von einer Lenkart anhand der momentanen Lage des landwirtschaftlichen Fahrzeugs gegenüber dem Pfad eingerichtet ist.

Eine bevorzugte Weiterbildung der Steuereinrichtung kann vorsehen, dass diese eingerichtet ist, ein Verfahren wie in diesem Dokument beschrieben auszuführen, insbesondere ein Verfahren nach zumindest einem der Verfahrensansprüche 1 bis 12 auszuführen.

Bevorzugt kann vorgesehen sein, dass die Schnittstelle, die Rechnereinheit und die Wahleinheit durch eine Gemeinsame Komponente wie bspw. der Rechnereinheit gebildet sein können und/oder das die Wahleinheit und die Schnittstelle Bestandteil der Rechnereinheit sein können.

Es kann vorgesehen sein, dass die Wahleinheit durch einen Algorithmus in der Rechnereinheit definiert ist.

Hinsichtlich der Vorteile und Ausführungsformen der erfindungsgemäßen Steuereinrichtung wird auf die Vorteile und Ausführungsformen des erfindungsgemäßen Verfahrens, des Lenksystem und das landwirtschaftliche Fahrzeug verwiesen.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst die Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoreinrichtungen oder Erfassungseinrichtungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern", "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch ein "Regeln" umfasst sein. Ebenso kann bei Verwendung des Begriffs "Regeln" gleichsam auch ein "Steuern" damit umfasst sein.

Gemäß einem weiteren Aspekt der Erfindung wird zudem ein Lenksystem für ein landwirtschaftliches Fahrzeug bereitgestellt. Das Lenksystem umfasst mindestens zwei lenkbare Achsen und eine Steuereinrichtung gemäß zumindest einer der in diesem Dokument beschriebenen Ausführungsformen.

Hinsichtlich der Vorteile und Ausführungsformen des erfindungsgemäßen Lenksystems wird auf die Vorteile und Ausführungsformen des erfindungsgemäßen Verfahrens, der Steuereinrichtung und das landwirtschaftliche Fahrzeug verwiesen.

Gemäß einem weiteren Aspekt der Erfindung wird ein landwirtschaftliches Fahrzeug mit einem Lenksystem wie in diesem Dokument beschrieben bereitgestellt und/oder mit einer Steuereinrichtung wie in diesem Dokument beschrieben bereitgestellt und/oder welches eingerichtet ist, ein Verfahren wie in diesem Dokument beschrieben auszuführen bereitgestellt. Insbesondere wird ein landwirtschaftliches Fahrzeug mit einem Lenksystem nach Anspruch 15 bereitgestellt und/oder mit einer Steuereinrichtung nach Anspruch 13 bereitgestellt und/oder welches eingerichtet ist, ein Verfahren nach einem der Ansprüche 1 bis 12 auszuführen.

Das landwirtschaftliche Fahrzeug kann bevorzugt ein autonomes selbstfahrendes landwirtschaftliches Fahrzeug sein.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine schematische Draufsicht auf eine landwirtschaftliche Fläche mit einem landwirtschaftlichen Fahrzeug,
- Figur 2: eine Draufsicht auf ein in einer Prinzipskizze dargestelltes landwirtschaftliches Fahrzeug,
- Figur 3A: eine Draufsicht des landwirtschaftlichen Fahrzeug gemäß Figur 2, welches in einem Abstands-Offset gegenüber einem Pfad angeordnet ist,
- Figur 3B: eine Draufsicht des landwirtschaftlichen Fahrzeug gemäß Figur 3A, bei welchem zu Erreichung einer geforderten Lage gegenüber dem Pfad alle Räder in einem gleichen Lenkwinkel eingelenkt sind,
- Figur 4A: eine Draufsicht des landwirtschaftlichen Fahrzeug gemäß Figur 2, welches in einem Winkel-Offset gegenüber einem Pfad angeordnet ist,
- Figur 4B: eine Draufsicht des landwirtschaftlichen Fahrzeug gemäß Figur 4A, bei welchem zu Erreichung einer geforderten Lage gegenüber dem Pfad die Räder mit sich voneinander unterscheidenden Drehzahlen angetrieben werden,
- Figur 4C: eine Draufsicht des landwirtschaftlichen Fahrzeug gemäß Figur 4A, bei welchem zu Erreichung einer geforderten Lage gegenüber dem Pfad die Räder mit sich voneinander unterscheidenden Lenkwinkel eingelenkt sind,
- Figur 5: ein Ablaufdiagramm mit den Verfahrensschritten des erfindungsgemäßen Verfahrens zum automatisierten Lenken eines landwirtschaftlichen Fahrzeugs auf einer landwirtschaftlichen Fläche.

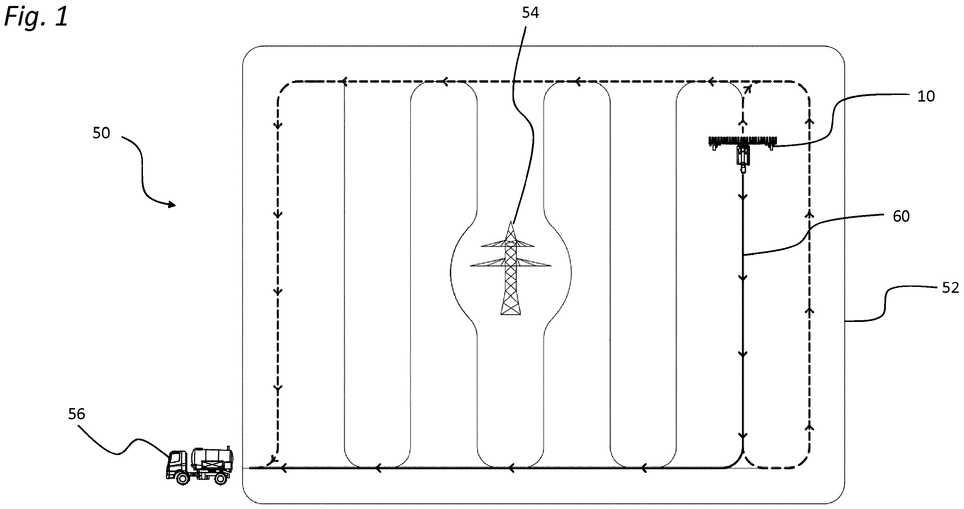

Die in den Figuren 1 bis 5 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt eine schematische Draufsicht auf eine landwirtschaftliche Fläche 50. Auf der landwirtschaftlichen Fläche 50 befindet sich ein landwirtschaftliches Fahrzeug 10 welches automatisiert entlang eines Pfades 60 bewegt wird.

Der Pfad 60 kann bspw. durch eine, respektive einer Vielzahl von Fahrtrouten und Fahrspuren definiert sein, welche Fahrtoute bspw. durch eine Spurplanungs- respektive Fahrtroutensoftware in Form sog. Leitlinien vorbestimmt werden kann. Der Pfad 60 ist u.a. definiert durch entsprechende Flächengrenzen 52 oder sich auf der Fläche 50 befindenden Hindernissen 54 (z.B. Strommasten oder dergl.). Zudem kann der Pfad 60 auch entsprechend einer Position bspw. eines Versorgungsfahrzeuges 56, welches sich bspw. am Rand der Fläche 50 befindet, definiert sein.

Der Pfad 60 respektive die Leitlinien können mittels der Spurplanungssoftware insbesondere in Verbindung mit einem Positionsbestimmungssystem 70 in einer Steuereinrichtung 100 des landwirtschaftlichen Fahrzeug 10 hinterlegt und/oder eingelesen werden und somit erfindungsgemäß vorbestimmt werden.

Gemäß einer alternativen oder ergänzenden Ausführungsvariante könnte der Pfad 60 jedoch bspw. auch durch zumindest eine Pflanzenreihe definiert, d.h. zweckmäßig vorbestimmt werden.

Insbesondere ist es möglich, dass das Vorbestimmen des Pfades 60 auf der landwirtschaftlichen Fläche 50 durch eine manuelle Eingabe und/oder durch ein Hinterlegen von Leitlinien in einer Steuereinrichtung 100 des landwirtschaftlichen Fahrzeugs 10 erfolgt und/oder durch ein sensorisches Erfassen von Pfaden 60 erfolgt, wobei die Steuereinrichtung 100 eine Schnittstelle 102 umfasst die mit einer Eingabeeinrichtung (z.B. zur manuellen Eingabe und/oder zum Hinterlegen von Leitlinien) und/oder einer Sensoreinrichtung 80 (z.B. Erfassungseinrichtung zur sensorischen Erfassung) gekoppelt ist.

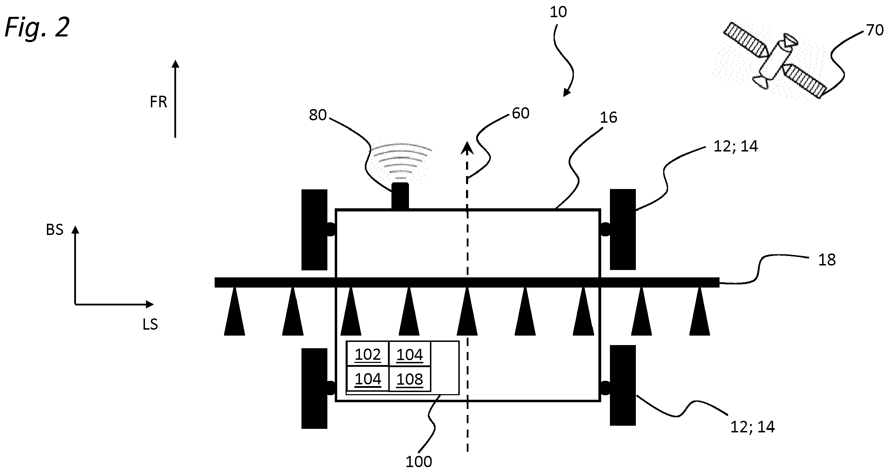

Die Figuren 2 bis 4 zeigen jeweils eine Draufsicht auf ein in einer Prinzipskizze dargestelltes landwirtschaftliches Fahrzeug 10 in unterschiedlichen Lagen gegenüber einem Pfad 60, die unter gemeinsamer Bezugnahme auf die Figuren 2 bis 4 beschrieben werden.

Das landwirtschaftliche Fahrzeug 10 umfasst zwei lenkbare Achsen 12, die gegenüber der Fahrrichtung FR hintereinander angeordnet sind. Die Lenkung ist insbesondere als Allradlenkung ausgeführt, d.h. das alle, die Achsen 12 bildenden Räder 14, lenkbar gegenüber einer Rahmenkonstruktion 16 des Fahrzeuges 10 gelagert sind.

Das landwirtschaftliche Fahrzeug 10 ist zweckmäßig als Trägerfahrzeug ausgeführt, an welches landwirtschaftliche Arbeitsgeräte 18 (z.B. Verteilelemente, Bodenbearbeitungswerkzeuge, Säschare und/oder dergl.) montiert sind, wobei die Arbeitsgeräte 18 gemäß der Figur 2 nur als Prinzipskizze entsprechend stark vereinfacht dargestellt sind.

Die Arbeitsgeräte 18 sind zweckmäßig zwischen den zwei lenkbaren Achsen 12 angeordnet und erstrecken sich zudem in einer größeren Breite (d.h. Längserstreckung LS) quer zur Fahrtrichtung FR als jeweils zwei gegenüberliegende und eine Achse 12 bildende Räder 14.

Insbesondere ist es bspw. möglich, dass die Arbeitsgeräte 18 eine Breite von bspw. 6 Meter, 12 Meter oder mehr aufweisen und bspw. das Fahrzeug 10, d.h. insbesondere dessen Räder 14 in einer Breite zueinander angeordnet sind die maximal 4 Meter oder maximal 6 Meter beträgt. Um ein derartig ausgebildetes Fahrzeug 10 auch auf einer öffentlichen Straße transportieren zu können ist es zudem möglich, dass das Fahrzeug 10 über eine Längsfahrteinrichtung verfügt, was bspw. bedeutet, dass die Räder 14 derartig lenkbar sind, dass das Fahrzeug 10 mitsamt dem Arbeitsgerät 18 entlang einer Längserstreckung LS des Arbeitsgerät 18 bewegt werden kann. Wobei hierfür es zudem vorgesehen sein kann, dass das Fahrzeug 10 quer zur Längserstreckung LS eine Breitenerstreckung BS aufweist, die in Abhängigkeit der gesetzlichen Anforderungen bspw. maximal 3 Meter oder maximal 4 Meter beträgt.

Insbesondere umfasst das landwirtschaftliche Fahrzeug 10 eine Steuereinrichtung 100 zum automatisierten Lenken des landwirtschaftlichen Fahrzeugs 10 auf der landwirtschaftlichen Fläche 50. Die Steuereinrichtung 100 ist insbesondere dazu eingerichtet, ein Verfahren gemäß einem der vorstehenden Ausführungsbeispiele auszuführen, d.h. vorzugsweise ein Verfahren nach einem der Ansprüche 1 bis 12 auszuführen.

Alternativ oder ergänzend umfasst das landwirtschaftliche Fahrzeug 10 ein Lenksystem, wobei das Lenksystem mindestens zwei lenkbare Achsen 12 und eine Steuereinrichtung 100 gemäß zumindest einem der vorstehenden Ausführungsbeispiele aufweist, d.h. vorzugsweise eine Steuereinrichtung 100 nach Anspruch 13 aufweist.

Vorzugsweise ist es gemäß einer alternativen oder ergänzenden Ausführungsvariante des landwirtschaftlichen Fahrzeug 10 vorgesehen, dass dieses ein Lenksystem gemäß einem der vorstehenden Ausführungsbeispiele (z.B. nach Anspruch 15) aufweist und/oder eine Steuereinrichtung 100 gemäß einem der vorstehenden Ausführungsbeispiele (z.B. nach Anspruch 13) aufweist und/oder dass dieses eingerichtet ist, ein Verfahren gemäß einem der vorstehenden Ausführungsbeispiele (z.B. nach einem der Ansprüche 1 bis 12) auszuführen.

Das landwirtschaftliche Fahrzeug 10 umfasst vorzugsweise eine Steuereinrichtung 100 zum automatisierten Lenken dieses auf einer landwirtschaftlichen Fläche 50. Die Steuereinrichtung 100 umfasst zweckmäßig vorzugsweise eine Schnittstelle 102, die zum Erfassen eines vorbestimmten Pfades 60 zum automatisierten Befahren der landwirtschaftlichen Fläche 50 eingerichtet ist. Zudem kann die Steuereinrichtung 100 eine Rechnereinheit 104 umfassen, die zur Vorgabe von sich voneinander unterscheidenden Lenkarten zur Erzeugung von Lenkbewegungen für die Achsen 12 zum Bewegen des landwirtschaftlichen Fahrzeugs 10 entlang des Pfades 60 eingerichtet ist. Zudem kann die Steuereinrichtung 100 eine Bestimmungseinheit 106 umfassen, die zum zumindest zeitweisen Bestimmen einer momentanen Lage des Landwirtschaftlichen Fahrzeugs 10 gegenüber dem Pfad 60 eingerichtet ist. Darüber hinaus kann die Steuereinrichtung 100 eine Wahleinheit 108 umfassen, die zur automatisierten Auswahl einer Lenkart anhand der momentanen Lage des landwirtschaftlichen Fahrzeugs 10 gegenüber dem Pfad 60 eingerichtet ist.

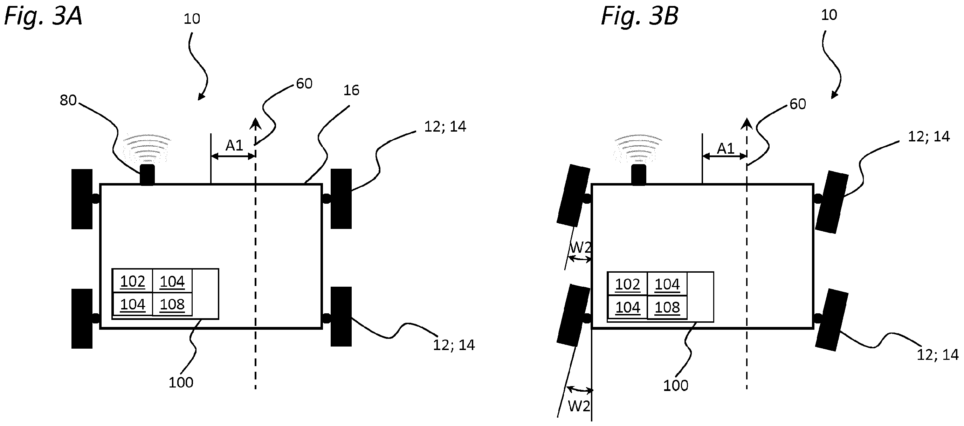

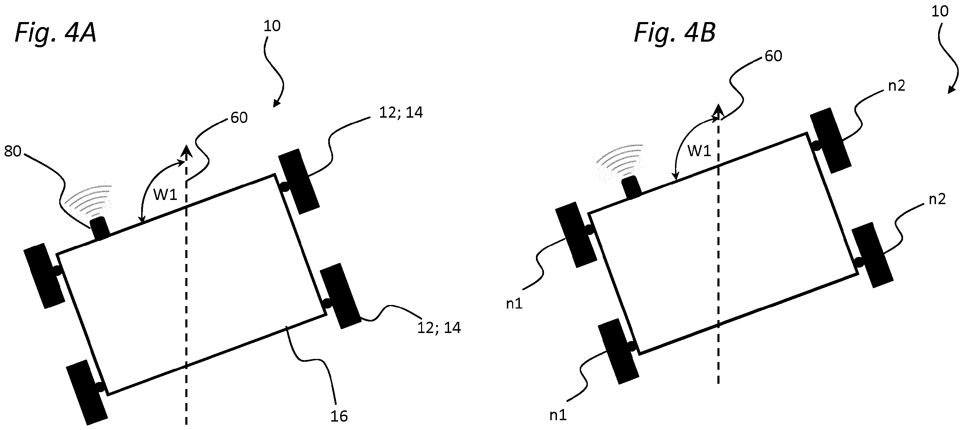

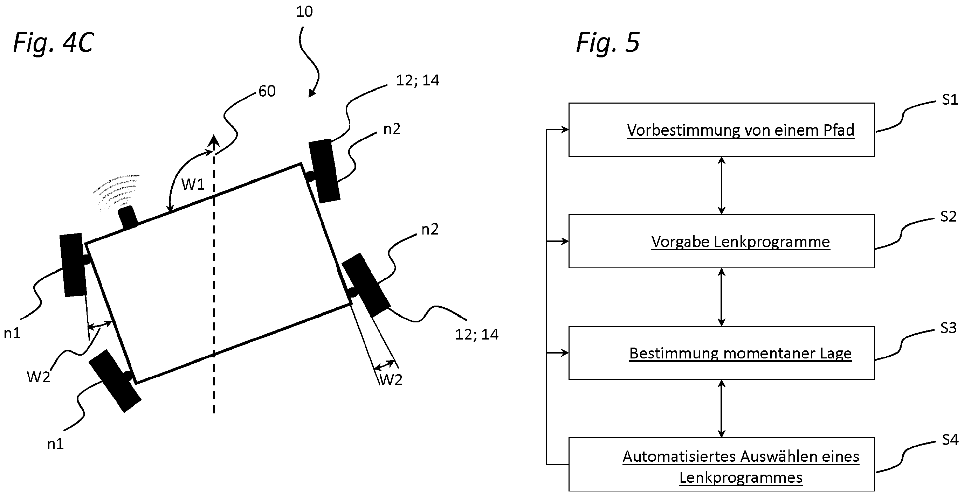

Insbesondere ist vorgesehen, dass ein Bestimmen der momentanen Lage des landwirtschaftlichen Fahrzeugs 10 gegenüber dem Pfad 60 ein Bestimmen eines im Wesentlichen parallel zum Pfad 60 orientierten Abstands-Offset A1 umfasst (siehe bspw. Figur 3) und/oder ein Bestimmen eines im Winkel gegenüber dem Pfad (60) orientierten Winkel-Offset W1 (siehe bspw. Figur 4) umfasst.

Wobei zum Bestimmen des Abstands-Offset A1 und/oder des Winkel-Offset W1 eine an dem landwirtschaftlichen Fahrzeug 10 angebaute Sensoreinrichtung 80 vorgesehen ist, die insbesondere als eine optische Erfassungseinrichtung (z.B. ein oder mehrere Kamera(s)) ausgebildet ist, alternativ oder ergänzend jedoch auch ein oder mehrere Positionsbestimmungssysteme umfassen könnte.

Erfindungsgemäß ist zweckmäßig vorgesehen, dass anhand der jeweiligen Lage des landwirtschaftlichen Fahrzeugs 10 ein automatisiertes Wechseln zwischen zumindest zwei sich voneinander unterscheidenden Lenkarten erfolgt oder eine Beibehaltung einer ausgewählten Lenkart erfolgt.

Insbesondere kann bei einem Abstands-Offset A1 automatisiert eine Lenkart ausgewählt werden, welche durch eine Allradlenkung definiert ist (siehe bspw. Figur 3B), wobei hierbei bspw. alle Räder 14 in einem gleichen Lenkwinkel W2 eingelenkt werden können, wodurch bspw. eine sog. Hundeganglenkung umgesetzt werden kann.

Zudem kann bspw. bei einem Winkel-Offset W1 automatisiert eine Lenkart ausgewählt werden, welche durch eine Anpassung der jeweiligen Raddrehzahl N1; N2 definiert ist (siehe bspw. Figur 4B), wobei hierbei die Räder 14 jeweils mit unterschiedlichen Raddrehzahlen N1; N2 derartig antreibbar sind, dass das Fahrzeug 10 eine entsprechende Lenkbewegung ausführt.

Alternativ oder ergänzend kann bspw. bei einem Winkel-Offset W1 automatisiert eine Lenkart ausgewählt werden, welche durch eine Anpassung der jeweiligen Lenkwinkel W2 der jeweiligen Räder 14 definiert ist (siehe bspw. Figur 4C), wobei hierbei wiederum die Lenkwinkel W2 der jeweiligen Räder 14 derartig unterschiedlich zueinander sein können, dass das Fahrzeug 10 eine entsprechende Lenkbewegung ausführt. Wobei hierzu angemerkt sei, dass die Lenkart derartig ausgeführt ist, dass die Lenkwinkel W2 jeweils unter Berücksichtigung eines gemeinsamen Momentanpol angepasst werden. Was bspw. bedeuten kann, dass die im Kurveninneren liegenden Räder 14 einen anderen, insbesondere kleineren, Lenkwinkel W2 aufweisen als die im Kurvenäußeren liegenden Räder 14 (vergl. Figur 4C).

Liegt bspw. der Abstands-Offset A1 oder der Winkel-Offset W1 innerhalb vorgegebener und/oder vorgebbarer Toleranzen ist es zudem möglich, dass automatisiert eine der Lenkarten ausgewählt wird, welche durch eine Beibehaltung der momentanen Ausrichtung der Räder 14 definiert ist.

Weitere Details des erfindungsgemäßen Verfahrens zum automatisierten Lenken des landwirtschaftlichen Fahrzeug 10 auf einer landwirtschaftlichen Fläche 50 gehen aus dem Ablaufdiagramm gemäß der Figur 5 hervor, wobei hierbei die jeweiligen Verfahrensschritte in einer, vorzugsweise zeitlichen, Abfolge gezeigt sind. Wobei die Abfolge der jeweiligen Schritte gemäß der in der Figur 5 abgebildeten Pfeile jeweils in einer festgelegten Abfolge der Schritte S1 bis S4 erfolgen kann, aber auch jeweils wieder zwischen den jeweiligen Schritten in beliebiger Abfolge erfolgen kann. Zudem ist es gemäß einer Weiterbildung des Verfahrens möglich, dass dieses noch um weitere Schritte ergänzt werden kann.

In einem ersten Schritt S1 erfolgt ein Vorbestimmen von einem Pfad 60 auf der landwirtschaftlichen Fläche 50 entlang welches das landwirtschaftliche Fahrzeug 10 automatisiert bewegt wird.

In einem zweiten Schritt S2 erfolgt eine Vorgabe von sich voneinander unterscheidenden Lenkarten (z.B. zumindest zwei sich voneinander unterscheidende Lenkarten) zur Erzeugung von Lenkbewegungen für die Achsen 12 zum Bewegen des landwirtschaftlichen Fahrzeugs entlang des Pfades 60.

Gemäß dem Schritt S3 ist ein zumindest zweitweises Bestimmen einer momentanen Lage des landwirtschaftlichen Fahrzeugs 10 gegenüber dem Pfad 60 vorgesehen. In einem Schritt S4 erfolgt zudem ein automatisiertes Auswählen eines Lenkprogrammes anhand der momentanen Lage des landwirtschaftlichen Fahrzeugs 10 gegenüber dem Pfad 60.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | | |
|---|---|---|---|
| 10 | Landwirtschaftliches Fahrzeug | 104 | Rechnereinheit |
| 12 | Achse | 106 | Bestimmungseinheit |
| 14 | Rad | 108 | Wahleinheit |
| 16 | Rahmenkonstruktion | | |
| 18 | Arbeitsgerät | FR | Fahrtrichtung |
| | | LS | Längserstreckung |
| 50 | Landwirtschaftliche Fläche | BS | Breitenerstreckung |
| 52 | Flächengrenze | | |
| 54 | Hindernis | A1 | Abstands-Offset |
| 56 | Versorgungsfahrzeug | W1 | Winkel-Offset |
| | | W2 | Lenkwinkel |
| 60 | Pfad | N1; N2 | Raddrehzahl, Drehzahl |
| 70 | Positionsbestimmungssystem | | |
| 80 | Sensoreinrichtung | S1 | Vorbestimmung Pfad |
| | | S2 | Vorgabe Lenkprogramm |
| 100 | Steuereinrichtung | S3 | Bestimmung momentane Lage |
| 102 | Schnittstelle | S4 | Auswahl Lenkprogramm |

## Patentansprüche

1. Verfahren zum automatisierten Lenken eines landwirtschaftlichen Fahrzeugs (10) auf einer landwirtschaftlichen Fläche (50), wobei das landwirtschaftliche Fahrzeug (10) mindestens zwei lenkbare Achsen (12) aufweist, **gekennzeichnet durch** die Schritte,
- Vorbestimmen von einem Pfad (60) auf der landwirtschaftlichen Fläche (50), entlang welchem das landwirtschaftliche Fahrzeug (10) automatisiert bewegt wird,
- Vorgabe von sich voneinander unterscheidenden Lenkarten zur Erzeugung von Lenkbewegungen für die Achsen (12) zum Bewegen des landwirtschaftlichen Fahrzeugs (10) entlang des Pfades (60),
- zumindest zeitweises Bestimmen einer momentanen Lage des landwirtschaftlichen Fahrzeugs (10) gegenüber dem Pfad (60),
- automatisiertes Auswählen einer der Lenkarten anhand der momentanen Lage des landwirtschaftlichen Fahrzeugs (10) gegenüber dem Pfad (60).

2. Verfahren nach Anspruch 1, **dadurch gekennzeichnet, dass** der Pfad (60) durch zumindest eine Pflanzenreihe definiert ist und/oder durch in einer Steuereinrichtung (100) hinterlegte Leitlinien definiert ist.

3. Verfahren nach einem der Ansprüche 1 oder 2, wobei der Schritt eines Bestimmens einer momentanen Lage des landwirtschaftlichen Fahrzeugs (10) gegenüber dem Pfad (60) ein Bestimmen eines im Wesentlichen parallel zum Pfad (60) orientierten Abstands-Offset (A1) umfasst und/oder ein Bestimmen eines im Winkel gegenüber dem Pfad (60) orientierten Winkel-Offset (W1) umfasst.

4. Verfahren nach Anspruch 3, wobei ein Bestimmen des Abstands-Offset (A1) und/oder des Winkel-Offset (W1) mittels einer Sensoreinrichtung (80) erfolgt, vorzugsweise mittels einer am landwirtschaftlichen Fahrzeug (10) angebauten Sensoreinrichtung (80) erfolgt, wobei die Sensoreinrichtung (80) durch zumindest einem von folgendem gebildet ist
- einer optischen Erfassungseinrichtung und/oder
- einem Positionsbestimmungssystem (70) und/oder
- einer Beschleunigungserfassungseinrichtung und/oder Drehratenerfassungseinrichtung.

5. Verfahren nach einem der vorherigen Ansprüche, wobei der Schritt des Vorbestimmens von einem Pfad (60) auf der landwirtschaftlichen Fläche (50) erfolgt durch
- eine manuelle Eingabe von Leitlinien in einer Steuereinrichtung und/oder
- ein Hinterlegen von Leitlinien in einer Steuereinrichtung und/oder
- ein sensorisches Erfassen von Pflanzenreihen durch eine, mittels einer Steuereinrichtung signalverbunden und/oder signalverbindbaren Erfassungseinrichtung, wobei die Steuereinrichtung zur Eingabe und/oder zum Hinterlegen und/oder zur Übertagung der Signale der Erfassungseinrichtung vorzugsweise eine Schnittstelle aufweist.

6. Verfahren nach einem der vorherigen Ansprüche, wobei die Lenkarten jeweils durch in einer Steuereinrichtung hinterlegte Lenkprogramme zur Bereitstellung von Lenksignalen zur Erzeugung von Lenkbewegungen für die Achsen (12) definiert sind.

7. Verfahren nach einem der vorherigen Ansprüche, wobei der Schritt des automatisierten Auswählens einer der Lenkarten anhand der momentanen Lage ein Wechseln zwischen sich voneinander unterscheidenden Lenkarten umfasst oder eine Beibehaltung einer ausgewählten Lenkart umfasst.

8. Verfahren nach Anspruch 7, wobei ein Wechsel zwischen den Lenkarten oder eine Beibehaltung einer der Lenkarten ein automatisiertes Auswählen einer Lenkart umfasst welche,
- durch eine Allradlenkung mit jeweils gleichen Lenkwinkel (W2) und/oder Raddrehzahlen (N1; N2) definiert ist, wobei diese Lenkart vorzugsweise bei einem Abstands-Offset (A1) automatisiert ausgewählt wird und/oder
- durch eine Anpassung der jeweiligen Raddrehzahl (N1; N2) und/oder von jeweiligen Lenkwinkel (W2) der jeweiligen Räder (14) zueinander definiert ist, wobei diese Lenkart vorzugsweise bei einem Winkel-Offset (A1) automatisiert ausgewählt wird und/oder
- durch eine Beibehaltung der momentanen Ausrichtung der Räder (14) und/oder der jeweiligen Raddrehzahl (N1; N2) definiert ist, wobei diese Lenkart vorzugsweise automatisiert ausgewählt wird, wenn ein Abstands-Offset (A1) und/oder ein Winkel-Offset (W1) innerhalb vorgegebener und/oder vorgebbaren Toleranzen liegt.

9. Verfahren nach einem der vorhergehenden Ansprüche, wobei wenigstens eine Lenkart durch eine Vorgewendefahrt und/oder eine Transportfahrt definiert ist, wobei die Vorgewendefahrt und/oder die Transportfahrt zusätzlich zumindest einen der folgenden Schritte umfasst,
- zumindest zeitweise Deaktivierung der Bestimmung einer momentanen Lage des landwirtschaftlichen Fahrzeugs (10) gegenüber dem Pfad (60), und/oder
- zumindest zeitweise Deaktivierung des automatisierten Auswählens einer der Lenkarten anhand der momentanen Lage des landwirtschaftlichen Fahrzeugs (10) gegenüber dem Pfad (60).

10. Verfahren nach einem der vorherigen Ansprüche, wobei ein automatisiertes Auswählen einer der Lenkarten unter Berücksichtigung einer Längendefinition erfolgt, wobei die Längendefinition durch die Größe des Abstands-Offset (A1) und/oder die Größe des Winkel-Offset (W1) definiert ist und wobei durch die Längendefinition ein Abstand in Fahrtrichtung (FR) des landwirtschaftlichen Fahrzeugs (10) definiert wird, bis zu welchem der Abstands-Offset (A1) und/oder der Winkel-Offset (W1) wieder innerhalb einer vorgegebenen und/oder vorgebbaren Toleranz liegen sollen.

11. Verfahren nach Anspruch 10, wobei eine Längendefinition anhand einer Auswertung erfolgt, ob an dem landwirtschaftlichen Fahrzeug (10) sich in Bodenkontakt befindende Arbeitswerkzeuge (18) angebaut sind und/oder ob sich Arbeitswerkzeuge (18) in Bondkontakt befinden.

12. Verfahren nach einem der vorherigen Ansprüche,
- wobei den Lenkarten eine Geschwindigkeit, vorzugsweise ein Geschwindigkeitsbereich, des landwirtschaftlichen Fahrzeugs (10), zugeordnet ist und wobei anhand der Lenkart eine Geschwindigkeit, vorzugsweise ein Geschwindigkeitsbereich des landwirtschaftlichen Fahrzeugs (10) automatisiert angepasst wird und/oder
- wobei ein automatisiertes Auswählen der Lenkart unter Berücksichtigung der Geschwindigkeit des landwirtschaftlichen Fahrzeugs (10) erfolgt.

13. Steuereinrichtung (100) welche zum automatisierten Lenken eines landwirtschaftlichen Fahrzeugs (10) auf einer landwirtschaftlichen Fläche (50) eingerichtet ist, wobei das landwirtschaftliche Fahrzeug (10) mindestens zwei lenkbare Achsen (12) aufweist, mit,
- einer Schnittstelle (102), die zum Erfassen eines, vorzugsweise vorbestimmten, Pfades (60) zum automatisierten Befahren der landwirtschaftlichen Fläche (50) eingerichtet ist,
- einer Rechnereinheit (104), die zur Vorgabe von sich voneinander unterscheidenden Lenkarten, zur Erzeugung von Lenkbewegungen für die Achsen (12) zum Bewegen des landwirtschaftlichen Fahrzeugs (10) entlang des Pfades (60), eingerichtet ist,
- einer Bestimmungseinheit (106), die zum zumindest zeitweisen Bestimmen einer momentanen Lage des Landwirtschaftlichen Fahrzeug (10) gegenüber dem Pfad (60) eingerichtet ist,
- einer Wahleinheit (108), die zur automatisierten Auswahl von einer Lenkart anhand der momentanen Lage des landwirtschaftlichen Fahrzeugs (10) gegenüber dem Pfad (60) eingerichtet ist.

14. Steuereinrichtung (100) nach Anspruch 13, **dadurch gekennzeichnet, dass** diese eingerichtet ist, ein Verfahren nach einem der Ansprüche 1 bis 12 auszuführen.

15. Lenksystem für ein landwirtschaftliches Fahrzeug (10), wobei das Lenksystem mindestens zwei lenkbare Achsen (12) und eine Steuereinrichtung (100) nach Anspruch 13 aufweist.

16. Landwirtschaftliches Fahrzeug (10) mit einem Lenksystem nach Anspruch 15 bereitgestellt und/oder mit einer Steuereinrichtung (100) nach Anspruch 13 bereitgestellt und/oder welches eingerichtet ist, ein Verfahren nach einem der Ansprüche 1 bis 12 auszuführen.
